# EUROPÄISCHE PATENTSCHRIFT

(11) **EP 3 312 008 B1**
(45) Veröffentlichungstag und Bekanntmachung des Hinweises auf die Patenterteilung: **22.04.2020**
(21) Anmeldenummer: 17190610.0
(22) Anmeldetag: 12.09.2017
(51) Int. Cl.: B32B 37/10

(54) **VERFAHREN ZUM LAMINIEREN VON MEHREREN IN EINEM STAPEL ANGEORDNETEN SCHICHTEN ZU EINEM DATENTRÄGER**
METHOD FOR LAMINATING A NUMBER OF LAYERS ARRANGED IN A STACK TO A DATA CARRIER
PROCÉDÉ DE LAMINAGE D'UNE PLURALITÉ DE COUCHES EMPILEES POUR OBTENIR UN SUPPORT DE DONNÉES

(30) Priorität: 10.10.2016 DE 102016119184
(43) Veröffentlichungstag der Anmeldung: 25.04.2018
(73) Patentinhaber: Bundesdruckerei GmbH, 10969 Berlin (DE)
(72) Erfinder: Siebert, Martin, 10965 Berlin (DE)
(74) Vertreter: Mammel und Maser

(56) Entgegenhaltungen:
- EP-A1- 2 596 950
- DE-A1-102009 002 023
- DE-A1-102015 007 919

## Beschreibung

Die Erfindung betrifft ein Verfahren zum Laminieren von mehreren in einem Stapel angeordneten Schichten zu einem Datenträger.

Aus der DE 10 2010 031 421 A1 ist eine Laminiervorrichtung zum Laminieren eines mehrlagigen Dokumentes bekannt, welche zwei Laminierplatten umfasst, zwischen denen ein zu laminierendes Dokument anordenbar ist. Die Laminierplatten bestehen aus mindestens einem elektrisch leitfähigen keramischen Material, welche elektrische Anschlüsse aufweisen, so dass die Laminierplatten und das Dokument durch Anlegen einer elektrischen Spannung an die elektrischen Anschlüsse während einer Aufheizphase eines Laminierprozesses aufheizbar sind. Nach einer vorbestimmten Laminierzeit des Laminierprozesses wird das Heizen beendet. Darauffolgend erfolgt eine Abkühlphase, in welcher die Laminierplatten durch ein Kühlmittel gekühlt werden.

Beim Laminieren von mehreren in einem Stapel angeordneten Schichten zu einem Datenträger, wie beispielsweise eine Karte, eine Personalisierdatenseite, ein Sicherheitsdokument oder dergleichen, werden die einzelnen Schichten durch Druck und/oder Temperatur zu einem kompakten Datenträger zusammengefügt. Der zeitliche Temperaturverlauf im Stapel während des Laminierens stellt sich dabei derart ein, dass sich zunächst die jeweils äußeren Schichten, welche die Produktoberflächen bzw. Schutz- und Overlayschichten darstellen, schnell erwärmen, wohingegen die innenliegenden Schichten demgegenüber eine längere Zeitdauer benötigen, bis diese durchgewärmt und laminiert beziehungsweise fließfähig geworden sind. Dies liegt darin begründet, dass zwischen den einzelnen Schichten relativ hohe Temperaturgradienten auftreten. Bei einem Datenträger aus mehreren Schichten ist das Aufheizen der auch innenliegenden Schichten oberhalb einer Erweichungstemperatur unkritisch oder sogar gewünscht.

Sofern ein Datenträger elektronische Bauelemente auf einer Trägerschicht enthält, wie beispielsweise IC-Chips, elektrische Leiter, Antennen oder dergleichen, werden diese aufgrund deren Druckempfindlichkeit durch eine Zwischenlage mit einer Ausnehmung oder Ausstanzung geschützt, wobei sich in der Ausnehmung das oder die elektronischen Bauelemente befinden. Zumindest eine Deckschicht oder Schutzschicht ist oberhalb einer solchen Zwischenlage vorgesehen, um die Ausnehmung zu überdecken. Bei einem solchen Aufbau liegen die Zwischenlage und das zumindest eine elektronische Bauelement in der Mitte des Stapels, wobei die Trägerschicht, welche das zumindest eine elektronische Bauelement aufnimmt, bereits außermittig liegt. Sofern solche Stapel von Schichten zu einem Datenträger laminiert werden, erfolgt über die Laminierplatten beziehungsweise das Ober- und Unterwerkzeug jeweils ein Temperatureintrag, wodurch ein symmetrischer Temperaturverlauf beim Laminieren im Stapel erzeugt wird. Dies führt dazu, dass die Zwischenlage zuletzt ihre eine Erweichungstemperatur erreicht. Aufgrund des Druckes während dem Laminieren und dem bereits erfolgten Erreichen der Erweichungstemperatur der darüber und darunterliegenden Schichten kann zumindest eine an die Zwischenlage angrenzende Schicht und die zumindest eine gegenüberliegende und an die Zwischenlage angrenzende Trägerschicht erweichen, so dass Fließvorgänge in der Trägerschicht zu Beschädigungen der druckempfindlichen elektrischen Bauelemente und folglich zu elektronischen Ausfällen kommen kann.

Aus der EP 2 596 950 A1 ist ein Verfahren zur Herstellung von Folienverbundmaterialien mit eingeschlossenen Bauteilen bekannt. Zum Herstellen eines Folienverbundkörpers aus mehreren Schichten werden diese durch Laminieren mit Heizplatten miteinander verbunden. Die Heizplatten einer solchen Laminiervorrichtung können mit einer zeitlich unabhängigen und einer örtlich unabhängigen Temperaturführung angesteuert werden.

Der Erfindung liegt deshalb die Aufgabe zugrunde, ein Verfahren zum Laminieren von mehreren in einem Stapel angeordneten Schichten zu einem Datenträger, wie beispielsweise einem Sicherheitsdokument, einer Personalisierdatenseite, einer Wert- oder Sicherheitskarte oder dergleichen, vorzuschlagen, um eine plastische Verformung der das zumindest eine elektrische Bauelement aufnehmenden Trägerschicht innerhalb des Stapels während dem Laminieren gering zu halten.

Diese Aufgabe wird durch ein Verfahren gelöst, bei welchem während einer Druckbeaufschlagung des Stapels die obere und untere Laminierplatte jeweils mit einer Laminiertemperatur beaufschlagt werden, so dass eine sich in dem zu laminierenden Stapel zwischen der oberen und unteren Laminierplatte einstellende Aufheiztemperatur mit einer Aufheizkennlinie im Stapel angesteuert wird, bei der ein Temperaturminimum in der Trägerschicht und/oder Zwischenlage liegt. Dadurch hat die die zumindest eine Ausnehmung der Zwischenlage überdeckende Deckschicht oder Schutzschicht bereits eine Erweichungstemperatur erreicht, bevor die Trägerfolie und/oder die Zwischenlage die Erweichungstemperatur erreicht, so dass dadurch bereits Fließvorgänge dieser zumindest einen Deckschicht und/oder Schutzschicht in die Ausnehmung der Zwischenlage eingeleitet werden. Durch diese Fließvorgänge können die freien Lücken in der Ausnehmung der Zwischenlage durch die zumindest eine Deckschicht gefüllt werden, bevor die Erweichungstemperatur der Trägerschicht und/oder Zwischenlage erreicht wird. Dadurch wird auch verhindert, dass das zumindest eine elektronische Bauelement auf der Trägerschicht seitlich verschoben wird, wodurch es wiederum zu elektronischen Ausfällen kommen kann, da die Kontaktstellen beschädigt werden oder brechen. Durch dieses Verfahren bleiben die Trägerschicht und/oder Zwischenlage sehr lange von Fließvorgängen unberührt, da die Erweichungstemperatur noch nicht erreicht ist, wohingegen dies bei den benachbarten zum oberen und unteren Rand des Stapels liegenden Schichten bereits erfolgt ist.

Eine bevorzugte Ausgestaltung des Verfahrens sieht vor, dass die Laminierplatte des Ober- und Unterwerkzeugs jeweils getrennt voneinander mit jeweils einer individuellen Arbeitstemperatur beaufschlagt werden. Dadurch ist eine gezielte Anpassung des Temperaturverlaufs der Aufheizkennlinie in Abhängigkeit des jeweiligen Aufbaus der zu laminierenden Schichten im Stapel ermöglicht. Eine produktspezifische Anpassung für die Lage des Temperaturminimums im Stapel während der Aufheizphase bis zum Laminieren des Stapels zu einem Datenträger kann dadurch gezielt eingestellt werden.

Eine bevorzugte Ausgestaltung des Verfahrens sieht vor, dass bei einem Stapel, bei dem die Trägerschicht mit dem zumindest einen elektronischen Bauelement außermittig zur Stapelhöhe positioniert ist, die Laminierplatte des Oberwerkzeugs oder des Unterwerkzeugs, welche mit einem geringeren Abstand zur Trägerschicht angeordnet ist, mit einer geringeren Aufheiztemperatur oder Wärmemenge als die gegenüberliegende Laminierplatte angesteuert wird. Dadurch wird ein asymmetrischer Temperaturverlauf der Aufheizkennlinie über die Höhe des Stapels angesteuert. Somit kann die an die Trägerschicht und/oder Zwischenlage angrenzenden Schichten bereits die Erweichungstemperatur erreicht oder überschritten haben, und die Trägerschicht und/oder Zwischenlage wird als letzte der im Stapel vorhandenen Schichten auf die Erweichungstemperatur aufgeheizt. Sofern beispielsweise die Zwischenlage und das zumindest eine elektronische Bauelement mittig zum Stapel positioniert sind, liegt die Trägerschicht außermittig. Dadurch wird auf der Seite, auf welcher die Trägerschicht außermittig liegt, eine langsamere Aufheizung erfolgen oder eine geringere Wärmemenge in die Laminierplatte eingebracht als an der gegenüberliegenden Seite.

Des Weiteren ist bevorzugt vorgesehen, dass das Ober-und Unterwerkzeug zumindest eine Heizplatte aufweist, die der Laminierplatte zugeordnet ist oder eine aufheizbare Laminierplatte aufweist und diejenige Heizplatte oder die geringer aufheizbare Laminierplatte, welche mit einem geringeren Abstand zur Trägerschicht positioniert sind, mit einer geringeren Aufheiztemperatur oder Wärmemenge beaufschlagt werden als die gegenüberliegende Heizplatte oder aufheizbare Laminierplatte. Dadurch kann durch eine unmittelbare Ansteuerung der Aufheiztemperatur ein asymmetrischer Temperaturverlauf innerhalb des Stapels eingebracht werden.

Alternativ ist vorgesehen, dass das Ober- und Unterwerkzeug zumindest eine Heizplatte und eine Laminierplatte sowie ein dazwischen angeordnetes Presspolster aufweisen und das Ober- oder Unterwerkzeug mit einem geringeren Abstand zur Trägerschicht und/oder Zwischenlage im Stapel ein Presspolster mit einer geringen Wärmeleitfähigkeit zugeordnet wird als dem gegenüberliegenden Unter- oder Oberwerkzeug. Somit wird diejenige Laminierplatte, welche näher zur Trägerschicht und/oder Zwischenlage im Stapel liegt, mit einem Presspolster mit einer geringeren Wärmeleitfähigkeit versehen und die gegenüberliegende Laminierplatte mit einem Presspolster mit einer höheren Wärmeleitfähigkeit zugeordnet. Diese Ausgestaltung weist den Vorteil auf, dass die jeweilige Aufheiztemperatur am Ober- und Unterwerkzeug gleich angesteuert werden kann, so dass durch die voneinander abweichenden Wärmeleitfähigkeiten der Presspolster wiederum ein voneinander abweichender Wärmeeintrag in die Laminierplatten ermöglicht wird. Dadurch kann trotz gleicher Aufheiztemperatur an den Heizplatten ein asymmetrischer Temperaturverlauf der Aufheizkennlinie im Stapel erzeugt und auf die Lage der Trägerschicht innerhalb des Stapels angepasst werden.

Bevorzugt ist bei der Alternative mit Presspolstern, welche vorzugsweise voneinander abweichende Wärmeleitfähigkeiten aufweisen, vorgesehen, dass die Aufheiztemperatur der Heizplatte des Ober- und Unterwerkzeugs jeweils mit derselben Temperatur aufgeheizt und der asymmetrische Temperaturverlauf durch die voneinander abweichenden Wärmeleitfähigkeiten der eingesetzten Presspolster gebildet werden.

Eine weitere bevorzugte Ausgestaltung des Verfahrens sieht vor, dass während dem Laminieren des Stapels voneinander abweichende Wärmemengen dem Ober- und Unterwerkzeug beziehungsweise den jeweiligen Laminierplatten zugeführt werden und vorzugsweise die Differenz der Wärmemenge gleich oder größer als 10 %, insbesondere mehr als 4 %, angesteuert wird.

Eine weitere bevorzugte Ausführungsform des Verfahrens sieht vor, dass die Aufheiztemperatur der Laminierplatten des Ober- und Unterwerkzeugs mit einer Temperaturdifferenz von mehr als 10°C, vorzugsweise mehr als 8°C, angesteuert wird. Dies genügt, um ein verzögertes Fließverhalten der Trägerschicht zu erzielen beziehungsweise dass bereits Fließvorgänge der an die Trägerschicht und/oder Zwischenlage angrenzenden Schichten eingeleitet werden, bevor die Trägerschicht und/oder die Zwischenlage anzuschmelzen beginnt.

Beim Einsatz von voneinander abweichenden Presspolstern weist deren Wärmeleitfähigkeit einen Unterschied von mehr als 10 %, vorzugsweise mehr als 4 %, auf. Auch dadurch lassen sich kontrollierte asymmetrische Verläufe erzielen.

Eine alternative Ausführungsform des Verfahrens sieht vor, dass bei einem zu laminierenden Stapel von Schichten, bei welchen die Trägerschicht mit dem zumindest einen Bauelement mittig zur Stapelhöhe positioniert ist, die Laminierplatten mit derselben Aufheiztemperatur angesteuert werden. Bei einem solchen Aufbau eines Datenträgeres, bei welchem die Trägerschicht in der Mitte der Stapelhöhe liegt, kann ein symmetrischer Temperaturverlauf im Stapel erzeugt und aufgebaut werden.

Eine weitere bevorzugte Ausgestaltung des Verfahrens sieht vor, dass die Trägerschicht und/oder die Zwischenlage aus einer hochschmelzenden Kunststoffschicht, vorzugsweise aus Polycarbonat, und die zumindest eine Deckschicht und/oder Schutzschicht aus einer niedrigschmelzenden Kunststoffschicht, insbesondere PET-G (Handelsbezeichnung für Polyethylenterephthalat Glykol, d.h. ein mit Glykol modifiziertes Polyethylenterephthalat), Polyurethan oder einem Compound aus Polycarbonat und Polyester, ausgebildet wird. Dadurch kann ein früherer Zeitpunkt des Fließens der an die Trägerschicht und/oder Zwischenlage angrenzenden Schutzschichten oder Deckschichten unterstützt werden.

Sofern die Träger- und/oder Zwischenlagen aus PET-G ausgebildet sind, können die daran angrenzenden Deckschichten oder Schutzschichten aus Polyurethan-Polymeren oder einem früher fließenden Compound auf Basis von PET-G bestehen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Ansicht eines buchartigen Dokuments mit einem Datenträger,
Figur 2 eine schematische Ansicht eines Schichtaufbaus des Datenträgers gemäß Figur 1,
Figur 3 eine perspektivische Ansicht einer alternativen Ausführungsform eines Datenträgers,
Figur 4 eine schematische Ansicht einer teilweise dargestellten Laminiervorrichtung mit einem darin angeordneten Stapel von Schichten zur Bildung des Datenträgers,
Figur 5 eine schematische Schnittansicht eines Stapels von zu einem Datenträger zu laminierenden Schichten mit einem asymmetrischen Temperaturverlauf innerhalb des Stapels während dem Laminieren, und
Figur 6 eine schematische Schnittansicht und ein dazugehöriger Temperaturverlauf gemäß einer alternativen Ausführungsform zu Figur 4.

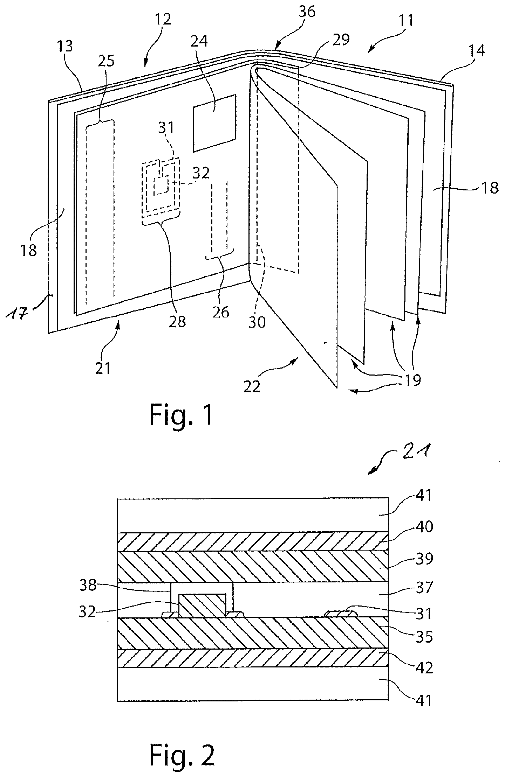

In Figur 1 ist ein buchartiges Dokument 11 dargestellt. Bei diesem buchartigen Dokument 11 handelt es sich beispielsweise um ein Wert- und/oder Sicherheitsdokument, insbesondere um einen Reisepass.

Dieses Dokument 11 umfasst einen Bucheinband 12 mit einer Buchdeckenvorderseite 13 und einer Buchdeckenrückseite 14. Diese Buchdeckenvorderseite 13 und die Buchdeckenrückseite 14 umfassen wenigstens eine Buchdeckeneinlage, die an deren Außenseite beispielweise einen Buchdeckeneinband 17 aufweisen können, wobei an der jeweiligen Innenseite der Buchdeckenvorderseite 13 und Buchdeckenrückseite 14 ein Vorsatz 18 aufgebracht sein kann. Bevorzugt sind der Buchdeckeneinband 17 und der Vorsatz 18 durch Verklebung mit der zumindest einen Buchdeckeneinlage verbunden.

Der Bucheinband 12 nimmt mehrere Datenseiten 19 auf. Bevorzugt ist auch ein Datenträger 21, wie beispielsweise eine Personalisierdatenseite, vorgesehen. Die Datenseite 19 und/oder der Datenträger 21 und der Vorsatz 18 sind vorzugsweise zu einem Buchblock 22 miteinander verbunden und in dem Bucheinband 12 befestigt. Beispielsweise können die Datenseiten 19 und/oder der Datenträger 21 und der Vorsatz 18 durch eine Naht zu einem Buchblock miteinander verbunden sein.

Der als Personalisierdatenseite ausgebildete Datenträger 21 ist beispielsweise gemäß ICAO-Standard ausgebildet und umfasst ein Bild 24 des Dokumenteninhabers, eine OCR (Optical Charakter Recognition)-maschinenlesbare Zeile 25 sowie weitere Personalisierdaten 26.

Der Datenträger 21 umfasst gemäß diesem Ausführungsbeispiel des Weiteren ein Transpondermodul 28, in welchem die Daten des Dokumenteninhabers und weitere Sicherheitsmerkmale abgespeichert sein können. Der Datenträger 21 ist beispielsweise als Einlegeblatt ausgebildet und kann gemäß dem Ausführungsbeispiel eine Lasche 29 umfassen, die sich über einen Nahtbereich 30 hinaus erstreckt. Alternativ kann anstelle der Lasche 29 eine vollständige Personalisier- oder Datenseite vorgesehen sein.

Der Datenträger 21 umfasst wenigstens zwei Kunststoffschichten, die miteinander laminiert sind und einen Folienverbund bilden. Dazwischenliegend ist das Transpondermodul 28 vorgesehen. Vorzugsweise kann zwischen den zumindest zwei äußeren Kunststoffschichten eine weitere Schicht, insbesondere aus Papier, eingebracht sein, welche die Personalisierdaten 26 sowie das Bild 24 und die OCR-maschinenlesbare Zeile 25 umfasst. Bevorzugt sind die äußeren Kunststoffschichten aus Polycarbonat ausgebildet und umhüllen die innenliegende Schicht bevorzugt vollständig.

Das Transpondermodul 28 umfasst einen IC-Chip 32 sowie eine damit verbundene Antenne 31, welche aus mehreren Windungen besteht und vorzugsweise aufgedruckt sein kann.

In Figur 2 ist schematisch ein Schichtaufbau des Datenträgers 21 dargestellt. Der Datenträger 21 besteht aus einem Stapel 34 von mehreren Schichten, die durch Laminieren fest miteinander verbunden sind, um den Datenträger 21 oder sonstige Dokumente, Datenträger, Karten oder dergleichen zu bilden. Auf einer Trägerschicht 35 ist ein elektronisches Bauelement 32 vorgesehen, insbesondere ein IC-Chip und eine damit verbundene Antenne 31, die bevorzugt auf der Trägerschicht 35 aufgebracht ist. Auf dieser Trägerschicht 35 ist eine Zwischenlage 37 vorgesehen, welche eine Ausnehmung 38 beziehungsweise eine Durchstanzung aufweist, welche im Bereich des elektronischen Bauelements 32 vorgesehen ist, so dass dieses elektronische Bauelement 32 innerhalb der Ausnehmung 38 positioniert ist. Auf der Zwischenlage 37 ist zumindest eine Deckschicht 39 vorgesehen. Bevorzugt können zwei oder mehrere Deckschichten 39, 40 auch mit unterschiedlicher Dicke vorgesehen sein. Abschließend kann eine Schutzschicht bzw. Overlayfolie 41 aufgebracht sein. Auf einer Unterseite der Trägerschicht 35 kann zumindest eine Deckschicht 42 vorgesehen sein. Darüber hinaus kann diese zumindest eine Deckschicht 42 wiederum durch zumindest eine Schutzschicht bzw. Overlayfolie 41 abgedeckt sein.

Nach dem Laminierprozess sind diese Schichten fest miteinander verbunden. Das elektronische Bauelement 32 mit der Antenne 31 beziehungsweise das Transpondermodul 28 ist vollständig innerhalb den Schichten in dem Datenträger 21 eingebunden.

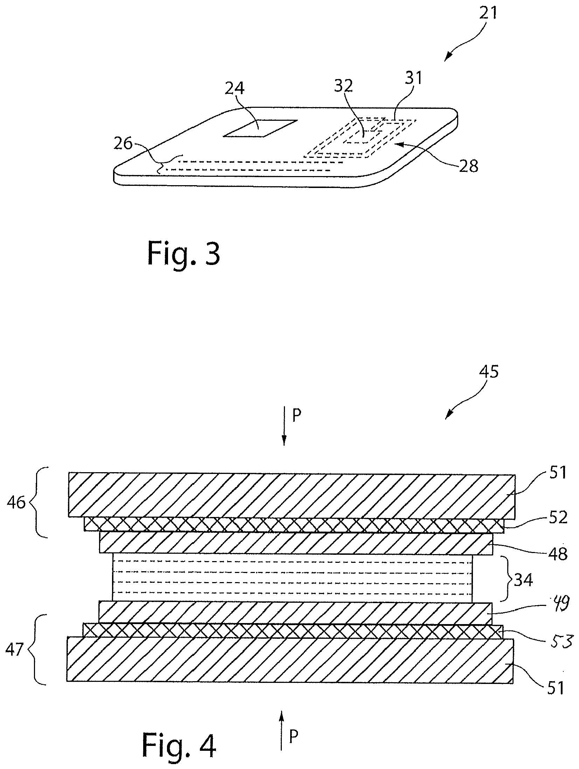

In Figur 3 ist eine perspektivische Ansicht eines Datenträgers 21 als ID-Karte, beispielsweise in Form einer Scheckkarte, Kreditkarte, Zugangskarte, Kundenkarte, Mitgliedsausweis, Gesundheitskarte oder eines Personalausweises, insbesondere im ID1-Format, dargestellt. Auch solche Datenträger 21 können einen Schichtaufbau aufweisen, welcher beispielhaft in Figur 2 beschrieben ist.

Zur Herstellung des Datenträgers 21 ist eine Laminiervorrichtung 45 vorgesehen, welche nur teilweise in Figur 4 dargestellt ist. Diese Laminiervorrichtung 45 umfasst ein Oberwerkzeug 46 sowie ein Unterwerkzeug 47. Sowohl dem Oberwerkzeug 46 als auch dem Unterwerkzeug 47 ist jeweils eine Laminierplatte (Laminierblech) 48, 49 zugeordnet. Das Ober- und Unterwerkzeug 46, 47 umfasst beispielsweise eine Heizplatte 51 sowie zwischen der Heizplatte 51 und der Laminierplatte (Laminierbleche) 48, 49 ein Presspolster 52, 53. Diese Presspolster 52, 53 bestehen aus einem ein- oder mehrschichtigen Kunststoffmaterial oder einem Verbundmaterial aus Kunststoff mit weiteren Materialien, die zum Ausgleich von Unebenheiten während dem Aufbringen eines Drucks durch das Oberwerkzeug 36 und/oder Unterwerkzeug 37 auf dem Stapel 34 dienen.

Alternativ zur dargestellten Ausführungsform können das Presspolster 52, 53 und die Heizplatte 51 auch jeweils aus einem Teil bestehen und beispielsweise mit einem Heizmedium, wie beispielsweise einer Flüssigkeit oder einem Gas, durchströmt werden. Im Ausführungsbeispiel wird die Heizplatte 51 elektronisch betrieben, indem beispielsweise Widerstandsheizelemente eingebracht sind. Alternativ können auch anderweitige Heizelemente verwendet werden. Über die Heizplatten 51 und Presspolster 52, 53 wird eine Wärmemenge oder Aufheiztemperatur auf die Laminierplatten 48, 49 übertragen, welche wiederum die einzelnen Schichten des Stapels 34 erwärmen, um die einzelnen Schichten auf eine Temperatur oberhalb der Erweichungstemperatur Tm überzuführen, so dass diese angeschmolzen sind und miteinander verschmelzen. Bei einem solchen Laminierprozess erwärmen sich die außenliegenden Schichten am Schnellsten. Dies führt dazu, dass beispielsweise die äußeren Schichten bereits die Erweichungstemperatur Tm erreicht oder überschritten haben, während die Schicht oder Schichten in der Mitte des Stapels 34 noch nicht laminier- beziehungsweise fließfähig sind.

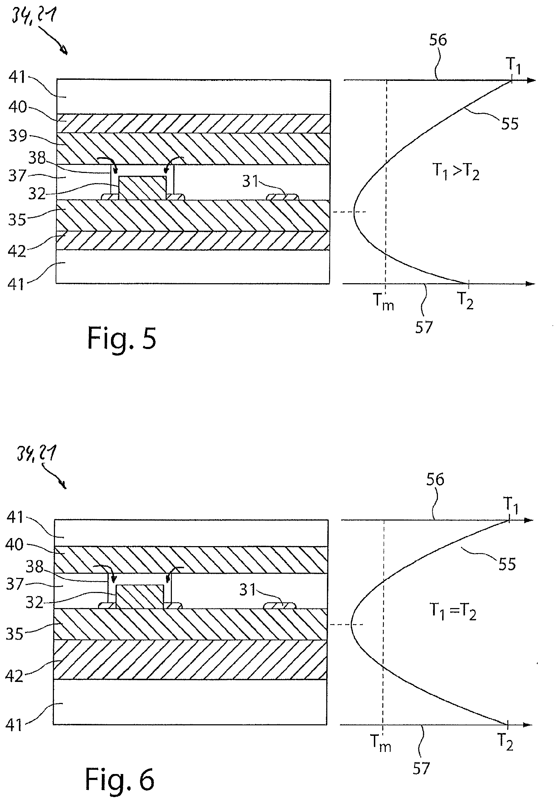

Zur Erhöhung der Produktionssicherheit und Vermeidung von elektrischen Ausfällen durch das Laminieren bei solchen Datenträgern 21 wird in Figur 5 gemäß einer ersten Ausführungsform der Erfindung ein Verfahren zum Laminieren von mehreren in einem Stapel 34 angeordneten Schichten zum Datenträger 21 dargestellt und näher beschrieben. Der Datenträger 21 umfasst beispielsweise einen Aufbau der Schichten zu einem Stapel 34 gemäß Figur 2. Benachbart zum Stapel 34 ist eine obere und untere Achse 56, 57 dargestellt, welche die auf die jeweilige äußerste Schicht 41 einwirkende Aufheiztemperatur T1, T2 der Laminierplatten 48, 49 darstellt. Darüber hinaus ist ausgehend von der jeweiligen Aufheiztemperatur T1, T2 ein sich innerhalb des Stapels 34 bildender Temperaturverlauf während einer Aufheizphase durch die Aufheizkennlinie 55 dargestellt.

Aufgrund des Aufbaus des Stapels 34, der Lage der Trägerschicht 35 und der Zwischenlage 37 wird die untere Laminierplatte 49 mit einer geringeren Aufheiztemperatur aufgeheizt als die obere Laminierplatte 48. Deshalb ist die Aufheiztemperatur T1 der oberen Laminierplatte größer als die Aufheiztemperatur T2 der unteren Laminierplatte 49. Dadurch ergibt sich die Aufheizkennlinie 55, die asymmetrisch ist, so dass sich ein Temperaturminimum in der Trägerschicht 35 und zwischen der Trägerschicht 35 und der Zwischenlage 37 einstellt. Die jeweiligen äußeren Schutzschichten 51 sind bereits auf die Temperatur T1 beziehungsweise T2 erwärmt. Zunehmend zur Mitte des Stapels 34 nimmt die Temperatur ab, so dass diese sogar unterhalb einer Grenzlinie liegt, welche einer Erweichungstemperatur Tm der Trägerschicht 35 und/oder der Zwischenschicht entspricht. Die Erweichungstemperatur Tm der Trägerschicht 35 und/oder der Zwischenlage 37 ist bevorzugt höher als die der daran angrenzenden Schicht 39, 40, 42, 41. Aus der Aufheizkennlinie 55 wird ersichtlich, dass im Bereich der Trägerschicht 35 und der Zwischenlage 37 zum Zeitpunkt der Aufzeichnung der Aufheizkennlinie 55 die Erweichungstemperatur Tm noch nicht erreicht ist, wohingegen an den angrenzenden Schichten, das heißt, der zumindest einen Deckschicht 39, 40 und Schutzschicht 41 oberhalb der Zwischenlage 37 als auch der Deckschicht 42 und der Schutzschicht 41, welche an einer Unterseite der Trägerschicht 35 angeordnet sind, bereits die Erweichungstemperatur Tm überschritten ist, das heißt, diese Schichten aufgeschmolzen sind, so dass diese bereits fließen können. Dies hat zur Folge, dass gemäß dem Ausführungsbeispiel in Figur 5 die Deckschicht 39, 40 in die Ausnehmung 38 der Zwischenlage 37 einfließen kann. Vorteilhafterweise fließt diese nur von oben in die Ausnehmung 38 ein, da die Zwischenlage 37 noch nicht fließfähig geworden ist. Dadurch wird eine Lücke zwischen dem Rand der Ausnehmung 38 und dem zumindest einen elektrischen Bauelement 32 ausgefüllt, während die Zwischenlage 37 und die Trägerschicht 35 noch ihre Form beibehalten, da diese noch nicht auf die Erweichungstemperatur aufgeheizt wird. Dies weist den Vorteil auf, dass keine Querkräfte zwischen der Trägerschicht 35 und dem elektronischen Bauelement 32 wirken, wodurch eine Beschädigung der Kontaktierung zwischen dem elektronischen Bauelement 32 und der Antenne 31 sowie gegebenenfalls weiteren elektrischen Komponenten verhindert wird.

Die Aufheiztemperatur T1 und die Aufheiztemperatur T2 für die obere Laminierplatte 48 und untere Laminierplatte 49 sind auf die Anzahl der Schichten des Stapels 34 und die Lage der Trägerschicht 35 und der Zwischenlage 37 zur Herstellung des Datenträgers 21 derart abgestimmt, dass während dem Laminieren des Stapels 39 ein Zeitfenster angesteuert werden kann, bei welchem die an die Zwischenlage 37 und Trägerschicht 35 angrenzenden Deckschichten 39, 40, 42 und Schutzschichten 41 bereits ihre Erweichungstemperatur erreicht haben und fließfähig sind, wohingegen die Zwischenlage 37 und/oder Trägerschicht 35 noch nicht fließfähig sind beziehungsweise die Erweichungstemperatur Tm noch nicht erreicht haben. Nach dem zumindest teilweisen Auffüllen der Lücke zwischen der Ausnehmung 38 und dem elektronischen Bauelement 32 kann eine weitere Temperaturzunahme im Stapel 34 erfolgen, so dass auch die Zwischenlage 37 und die Trägerschicht 35 die Erweichungstemperatur überschreiten und miteinander laminiert werden.

Die voneinander abweichenden Aufheiztemperaturen T1 und T2 in der Laminierplatte 48, 49 können gemäß der ersten Ausführungsform in Figur 5 dahingehend erreicht werden, indem über die Steuerung der Laminiervorrichtung 45 die Heizplatten 51 mit unterschiedlichen Temperaturen angesteuert werden.

Bei der Einstellung der Aufheiztemperatur der Heizplatten 51 ist bevorzugt zur Erzielung einer Temperaturdifferenz zwischen der Aufheiztemperatur T1 und T2 ein Temperaturunterschied von 10° oder mehr, vorzugsweise mehr als 8°, vorgesehen.

Um den vorbeschriebenen Effekt des Füllens der Ausnehmung 38 der Zwischenlage 37 zu begünstigen, kann vorgesehen sein, dass die zumindest eine Deckschicht 39, 40 und/oder Schutzschicht 41 einen niedrigeren Schmelzpunkt als die Zwischenlage 37 und Trägerschicht 35 aufweisen.

Gemäß einer Ausführungsform können beispielsweise die Trägerschicht 35 und Zwischenfolie 37 aus Polycarbonat bestehen. Die dabei angrenzenden und weiter außenliegenden Deckschichten 39, 40, 42 und Schutzschichten 41 können aus PET-G, Polyurethan oder aus einem Compound aus Polyester und Polycarbonat bestehen.

Des Weiteren können beispielsweise die Trägerschicht 35 und Zwischenlage 37 aus PET-G bestehen, wobei die daran angrenzenden Deckschichten 39, 40, 42 und Schutzschichten 41 aus Polyurethan, Polymeren oder einem Compound auf Basis von PET-G bestehen, der niedrig schmelzender ist als das Kunststoffmaterial für die Trägerschicht 35 und Zwischenlage 37.

Alternativ kann bei dem Ausführungsbeispiel gemäß Figur 5 vorgesehen sein, dass die Heizplatten 51 mit der gleichen Aufheiztemperatur durch die Steuerung der Laminiervorrichtung 45 angesteuert werden, wobei zwei voneinander abweichende Presspolster 52, 53 eingesetzt werden. Das im Oberwerkzeug 46 vorgesehene Presspolster 52 weist eine höhere Wärmeleitfähigkeit auf als das im Unterwerkzeug 47 eingesetzte Presspolster 52. Durch die unterschiedliche Wärmeleitfähigkeit kann die Temperaturdifferenz zwischen der Temperatur T1 und T2 an der Laminierplatte 48, 49 bewirkt werden. Vorzugsweise ist ein Unterschied in der Wärmeleitfähigkeit der Presspolster 52, 53 von weniger als 10 %, insbesondere weniger als 5 %, vorgesehen.

In Figur 6 ist das erfindungsgemäße Verfahren für eine alternative Ausführungsform eines Stapels 34 von Schichten zur Bildung des Datenträgers 21 dargestellt. Bei dieser Ausführungsform des Datenträgers 21 ist beispielsweise die Trägerschicht 35 mittig im Stapel angeordnet und die Zwischenlage 37 außermittig des Stapels 34 positioniert. Somit ist auch das zumindest eine elektrische Bauelement 32 außermittig angeordnet. Auch bei einem solchen Aufbau eines Datenträgers 21 kann das erfindungsgemäße Verfahren durchgeführt werden. Bei dieser Ausführungsform können beispielsweise die Aufheiztemperaturen T1 und T2 in der Laminierplatte 48, 49 in gleichem Umfang angesteuert werden, so dass sich daraus ein symmetrischer Temperaturverlauf gemäß der Aufheizkennlinie 55 zu einem bestimmten Zeitpunkt während des Aufheizens des Stapels 34 ergibt. Auch ist denkbar, dass beim Aufbau des Stapels 34 gemäß Figur 6 die Aufheiztemperatur T2 geringfügig höher als die Aufheiztemperatur T1 ist, so dass wiederum ein asymmetrischer Temperaturverlauf erfolgt, wobei sich der Umkehrpunkt der Aufheizkennlinie 55 geringfügig nach oben verschiebt, das heißt, zwischen der Trägerschicht 35 und der Zwischenlage 37 liegt.

Somit kann durch die Anpassung eines Temperaturverlaufs beim Laminieren eines Stapels 34 von Schichten für einen Datenträger 21 ein vorzeitiges Fließen von Deckschichten 39, 40, 42 angesteuert werden, bevor eine Zwischenlage 37 und Trägerschicht 35 eine Erweichungstemperatur Tm erreicht oder überschreitet, wodurch das zumindest eine elektronische Bauelement 32 in der Position innerhalb der Ausnehmung 38 vorläufig gesichert werden kann, bevor ein vollständiges Laminieren des gesamten Stapels 34 erfolgt.

## Patentansprüche

1. Verfahren zum Laminieren von mehreren in einem Stapel (34) angeordneten Schichten (35, 37, 39, 40, 41) zu einem Datenträger (21), der durch zumindest eine Trägerschicht (35) mit zumindest einem darauf angeordneten elektronischen Bauelement (32) sowie mit einer eine Ausnehmung (38) aufweisenden Zwischenlage (37), in der das zumindest eine elektronische Bauelement (32) positioniert ist, und mit zumindest einer das elektronische Bauelement (32) überdeckenden Schicht (39, 40, 41) gebildet wird, mit einer Laminiervorrichtung (45), welche ein Oberwerkzeug (46) und ein Unterwerkzeug (47) mit jeweils einer Laminierplatte (48, 49) aufweist, bei dem zwischen der oberen und unteren Laminierplatte (48, 49) der zu laminierende Stapel (34) positioniert wird und bei dem die obere und untere Laminierplatte (48, 49) auf den Stapel (34) zubewegt und der Stapel (34) zumindest mit Druck beaufschlagt wird und ein Laminierprozess mit einer Aufheizphase zum Laminieren der Schichten (35, 37, 39, 40, 41) zum Datenträger (21) angesteuert wird, **dadurch gekennzeichnet, dass** während der Druckbeaufschlagung des Stapels (34) die obere und die untere Laminierplatte (48, 49) jeweils mit einer Aufheiztemperatur (T1, T2) angesteuert werden, so dass eine sich in dem zu laminierenden Stapel (34) zwischen der oberen und unteren Laminierplatte (48, 49) einstellende Aufheizkennlinie (55) angesteuert wird, bei der ein Temperaturminimum in der Trägerschicht (35) und/oder Zwischenlage (37) liegt.

2. Verfahren nach Anspruch 1, **dadurch gekennzeichnet, dass** die Laminierplatten (48, 49) jeweils getrennt voneinander mit jeweils einer individuellen unterschiedlichen Aufheiztemperatur (T1, T2) beaufschlagt werden.

3. Verfahren nach Anspruch 1 oder 2, **dadurch gekennzeichnet, dass** bei einem zu laminierenden Stapel (34), bei dem die Trägerschicht (35) mit dem zumindest einen elektronischen Bauelement (32) außermittig zur Stapelhöhe positioniert ist, die jeweilige Laminierplatte (48, 49), welche mit einem geringeren Abstand zur Trägerschicht (35) angeordnet ist, mit einer geringeren Aufheiztemperatur oder Wärmemenge als die gegenüberliegende Laminierplatte (49, 48) angesteuert wird.

4. Verfahren nach einem der vorhergehenden Ansprüche, **dadurch gekennzeichnet, dass** das Ober- und Unterwerkzeug (46, 47) zumindest eine Heizplatte (51) und eine Laminierplatte (48, 49) oder eine aufheizbare Laminierplatte (48, 49) aufweist und das Oberwerkzeug (46) oder Unterwerkzeug (47), welches mit einem geringeren Abstand zur Trägerschicht (35) angeordnet ist, mit einer geringeren Aufheiztemperatur (T1, T2) oder Wärmemenge angesteuert wird als das gegenüberliegende Ober- oder Unterwerkzeug (46, 47).

5. Verfahren nach Anspruch 1, **dadurch gekennzeichnet, dass** das Oberwerkzeug (46) und Unterwerkzeug (47) zumindest eine Heizplatte (51) und eine Laminierplatte (48, 49) sowie ein dazwischen angeordnetes Presspolster (52, 53) aufweist und der Laminierplatte mit einem geringen Abstand zur Trägerschicht (35) ein Presspolster (52; 53) mit einer geringeren Wärmeleitfähigkeit als das gegenüberliegende Presspolster (53; 52) zugeordnet wird.

6. Verfahren nach Anspruch 5, **dadurch gekennzeichnet, dass** die Heizplatte (51) des Ober- und Unterwerkzeugs (46, 47) jeweils mit derselben Temperatur aufgeheizt werden.

7. Verfahren nach einem der vorhergehenden Ansprüche, **dadurch gekennzeichnet, dass** während dem Laminieren des Stapels (34) zwischen dem Ober- und Unterwerkzeug (46, 47) voneinander abweichende Wärmemengen der Laminierplatten (48, 49) zugeführt werden und vorzugsweise eine Differenz der Wärmemenge von mehr als 10 %, insbesondere mehr als 4 %, angesteuert wird.

8. Verfahren nach einem der vorhergehenden Ansprüche, **dadurch gekennzeichnet, dass** die Aufheiztemperatur (T1, T2) des Oberwerkzeugs (46) und Unterwerkzeugs (47) mit einer Temperaturdifferenz von mehr als 10° angesteuert wird.

9. Verfahren nach Anspruch 5, **dadurch gekennzeichnet, dass** für das Oberwerkzeug (46) und Unterwerkzeug (47) jeweils ein Presspolster (52, 53) mit voneinander abweichender Wärmeleitfähigkeit eingesetzt wird, bei denen die Abweichung in der Wärmeleitfähigkeit gleich oder größer als 10 %, vorzugsweise mehr als 5 %, ist.

10. Verfahren nach Anspruch 1, **dadurch gekennzeichnet, dass** bei einem zu laminierenden Stapel (34) von Schichten, bei welchen die Trägerschicht (35) mittig zur Stapelhöhe positioniert ist, das Ober- und Unterwerkzeug (46, 47) mit derselben Aufheiztemperatur (T1, T2) angesteuert werden.

11. Verfahren nach Anspruch 1, **dadurch gekennzeichnet, dass** die Trägerschicht (35) und/oder Zwischenlage (37) aus einer höher schmelzenden Kunststoffschicht ausgebildet werden, vorzugsweise aus Polycarbonat (PC), und die zumindest eine Deckschicht (39, 42) und/oder Schutzschicht (41) aus einer niedrig schmelzenden Kunststoffschicht, insbesondere PET-G, PU oder einem Compound aus Polycarbonat und Polyester, ausgebildet werden.

12. Verfahren nach Anspruch 1, **dadurch gekennzeichnet, dass** die Trägerschicht (35) und/oder Zwischenlage (37) aus einer höher schmelzenden Kunststoffschicht ausgebildet werden, vorzugsweise aus PET-G, und die zumindest eine Deckschicht (39, 42) und/oder Schutzschicht (41) aus einer niedrig schmelzenden Kunststoffschicht, insbesondere aus einem Polyurethanpolymer oder einem früher fließenden Compound auf Basis von PET-G, ausgebildet werden.

## Claims

1. A method of laminating a plurality of layers (35, 37, 39, 40, 41) arranged in a stack (34) to create a data carrier (21) which is formed by at least one support layer (35) with at least one electronic component (32) and with an intermediate layer (37) including a recess (38) in which the at least one electronic component (32) is positioned, and with at least one layer (39, 40, 41) covering the electronic component (32), said method employing a laminating device (45) which has an upper tool (46) and a lower tool (47) having each a lamination plate (48, 49), and in which the stack (34) to be laminated is positioned between the upper and lower lamination plates (48, 49), and in which the upper and lower lamination plates (48, 49) are moved towards the stack (34) and said stack (34) is at least exposed to pressure and a lamination process is activated which includes a heating stage to cause the layers (35, 37, 39, 40, 41) to be laminated so as to form the data carrier (21), **characterised in that** while pressure is exerted on the stack (34), the upper and lower lamination plates (48, 49) are activated and their heating temperatures (T1, T2) are respectively set in such a manner that between the upper and lower lamination plates (48, 49) a heating characteristic (55) is established in the stack (34) to be laminated in which a temperature minimum is targeted to be located in the support layer (35) and/or in the intermediate layer (37).

2. The method as claimed in claim 1, **characterised in that** the lamination plates (48, 49) are activated separately from each other, each of them being individually subjected to a different heating temperature (T1, T2).

3. The method as claimed in claim 1 or 2, **characterised in that** in a stack (34) to be laminated in which the support layer (35) with the at least one electronic component (32) is positioned off-centre with respect to the stack height, the respective lamination plate (48, 49) that is disposed at a smaller distance from the support layer (35) is activated using a lower heating temperature or a smaller amount of heat than the opposite lamination plate (49, 48).

4. The method as claimed in any of the preceding claims, **characterised in that** the upper and lower tools (46, 47) have at least one heating plate (51) and one lamination plate (48, 49) or have a heatable lamination plate (48, 49), and **in that** the upper tool (46) or lower tool (47) which is disposed at a smaller distance from the support layer (35) is activated using a lower heating temperature (T1, T2) or a smaller amount of heat than the respective opposite upper or lower tool (46, 47).

5. The method as claimed in claim 1, **characterised in that** the upper tool (46) and the lower tool (47) have at least one heating plate (51) and one lamination plate (48, 49) as well as a press pad (52, 53) disposed therebetween, and **in that** the lamination plate located at a smaller distance from the support layer (35) has a press pad (52; 53) associated therewith which has a lower thermal conductivity than the respective opposite press pad (53; 52).

6. The method as claimed in claim 5, **characterised in that** the heating plates (51) of the upper and lower tools (46, 47) are each heated at the same temperature.

7. The method as claimed in any of the preceding claims, **characterised in that** while the stack (34) undergoes lamination, the amounts of heat provided to the lamination plates (48, 49) differ from each other between the upper and lower tools (46, 47) and **in that** preferably such difference in the amount of heat is set to be more than 10 %, in particular more than 4 %.

8. The method as claimed in any of the preceding claims, **characterised in that** the respective heating temperatures (T1, T2) of the upper tool (46) and the lower tool (47) are activated in a manner to create a temperature difference therebetween of more than 10 °.

9. The method as claimed in claim 5, **characterised in that** for the upper tool (46) and the lower tool (47), press pads (52, 53) having divergent degrees of thermal conductivity are used in which the divergence in thermal conductivity is equal to, or greater than, 10 %, preferably more than 5 %.

10. The method as claimed in claim 1, **characterised in that** in a stack (34) of layers to be laminated in which the support layer (35) is centrally positioned with respect to the stack height, the upper and lower tools (46, 47) are activated using the same heating temperature (T1, T2).

11. The method as claimed in claim 1, **characterised in that** the support layer (35) and/or the intermediate layer (37) are formed of a plastic layer having a higher melting temperature, preferably of polycarbonate (PC), and **in that** the at least one covering layer (39, 42) and/or protective layer (41) are formed of a plastic layer having a low melting temperature, in particular PETG, PU, or a compound consisting of polycarbonate and polyester.

12. The method as claimed in claim 1, **characterised in that** the support layer (35) and/or the intermediate layer (37) are formed of a plastic layer having a higher melting temperature, preferably of PETG, and **in that** the at least one covering layer (39, 42) and/or protective layer (41) are formed of a plastic layer having a low melting temperature, in particular of a polyurethane polymer or of a compound based on PETG and having an earlier point of liquefaction

## Revendications

1. Procédé destiné à stratifier plusieurs couches (35, 37, 39, 40, 41) disposées en une pile (34) en vue de former un support de données (21) qui est constitué d'au moins une couche support (35) comportant au moins un composant électronique (32) disposé sur celle-ci ainsi qu'une couche intermédiaire (37) présentant un évidement (38) dans lequel est positionné ledit au moins un composant électronique (32), et au moins une couche (39, 40, 41) recouvrant le composant électronique (32), et ce à l'aide d'un dispositif de stratification (45) qui présente un outil supérieur (46) et un outil inférieur (47) pourvus respectivement d'une plaque de stratification (48, 49), procédé lors duquel la pile (34) à stratifier est disposée entre les plaques de stratification supérieure et inférieure (48, 49) et lors duquel lesdites plaques de stratification supérieure et inférieure (48, 49) sont déplacées vers la pile (34) et ladite pile (34) est au moins mise sous pression, et lors duquel un processus de stratification est activé avec une phase de chauffe destinée à stratifier les couches (35, 37, 39, 40, 41) en vue de former le support de données (21), **caractérisé en ce que** pendant que la pile (34) est mise sous pression, les plaques de stratification supérieure et inférieure (48, 49) sont soumises respectivement à une température de chauffe (T1, T2) de manière à obtenir entre lesdites plaques de stratification supérieure et inférieure (48, 49) une caractéristique de chauffe (55) réglée de telle sorte qu'une valeur de température minimale se situe dans la couche support (35) et/ou la couche intermédiaire (37).

2. Procédé selon la revendication 1, **caractérisé en ce que** les plaques de stratification (48, 49) sont soumises séparément l'une de l'autre respectivement à une température de chauffe individuelle (T1, T2) différente.

3. Procédé selon la revendication 1 ou 2, **caractérisé en ce que** dans le cas d'une pile (34) à stratifier dans laquelle la couche support (35) pourvue dudit au moins un composant électronique (32) est positionnée de manière excentrée par rapport à la hauteur de pile, la plaque de stratification respective (48, 49) qui est disposée selon un espacement plus faible par rapport à la couche support (35) est soumise à une température de chauffe ou une quantité de chaleur plus faible que la plaque de stratification (49, 48) opposée.

4. Procédé selon l'une quelconque des revendications précédentes, **caractérisé en ce que** les outils supérieur et inférieur (46, 47) présentent respectivement au moins une plaque de chauffage (51) et une plaque de stratification (48, 49) ou une plaque de stratification (48, 49) chauffable et que l'outil supérieur (46) ou l'outil inférieur (47) qui est disposé selon un espacement plus faible par rapport à la couche support (35) est soumis à une température de chauffe (T1, T2) ou une quantité de chaleur plus faible que l'outil supérieur ou inférieur (46, 47) opposé.

5. Procédé selon la revendication 1, **caractérisé en ce que** l'outil supérieur (46) et l'outil inférieur (47) présentent respectivement au moins une plaque de chauffage (51) et une plaque de stratification (48, 49) ainsi qu'un coussin de pressage (52, 53) disposé entre ceux-ci, et que la plaque de stratification présentant un espacement plus faible par rapport à la couche support (35) se voit affecter un coussin de pressage (52 ; 53) avec une conductibilité thermique plus faible que le coussin de pressage (53 ; 52) opposé.

6. Procédé selon la revendication 5, **caractérisé en ce que** les plaques de chauffage (51) des outils supérieur et inférieur (46, 47) sont chauffées respectivement avec la même température.

7. Procédé selon l'une quelconque des revendications précédentes, **caractérisé en ce que** pendant la stratification de la pile (34), les quantités de chaleur amenées aux plaques de stratification (48, 49) diffèrent entre les outils supérieur et inférieur (46, 47), et que de préférence lesdites quantités de chaleur sont réglées de manière à présenter une différence de plus de 10 %, en particulier de plus de 4 %.

8. Procédé selon l'une quelconque des revendications précédentes, **caractérisé en ce que** les températures de chauffe (T1, T2) de l'outil supérieur (46) et de l'outil inférieur (47) sont réglées de manière à présenter entre elles une différence de température de plus de 10 °.

9. Procédé selon la revendication 5, **caractérisé en ce que** pour l'outil supérieur (46) et l'outil inférieur (47) est utilisé respectivement un coussin de pressage (52, 53) à conductibilité thermique différente dont la divergence de conductibilité thermique est égale ou supérieure à 10%, de préférence supérieure à 5 %.

10. Procédé selon la revendication 1, **caractérisé en ce que** dans le cas d'une pile (34) de couches à stratifier dans lesquelles la couche support (35) est positionnée de manière centrée par rapport à la hauteur de pile, les outils supérieur et inférieur (46, 47) sont réglés pour présenter la même température de chauffe (T1, T2).

11. Procédé selon la revendication 1, **caractérisé en ce que** la couche support (35) et/ou la couche intermédiaire (37) sont réalisées en une couche de matière plastique dont la température de fusion est plus élevée, de préférence en polycarbonate (PC), et que ladite au moins une couche de revêtement (39, 42) et/ou couche de protection (41) sont réalisées en une couche de matière plastique à température de fusion basse, en particulier en PETG, PU ou en un compound de polycarbonate et de polyester.

12. Procédé selon la revendication 1, **caractérisé en ce que** la couche support (35) et/ou la couche intermédiaire (37) sont réalisées en une couche de matière plastique dont la température de fusion est plus élevée, de préférence en PETG, et que ladite au moins une couche de revêtement (39, 42) et/ou couche de protection (41) sont réalisées en une couche de matière plastique à température de fusion basse, en particulier en un polymère de polyuréthane ou un compound à base de PETG entrant en fusion plus tôt.
